**Europäisches Patentamt**

(19) **European Patent Office**

**Office européen des brevets**

(11) Publication number: **0 056 687**
**A2**

(12) # EUROPEAN PATENT APPLICATION

(21) Application number: **82300064.1**

(22) Date of filing: **07.01.82**

(51) Int. Cl.³: **A 01 C 1/04**

(30) Priority: **15.01.81 ZA 810266**
**26.08.81 ZA 815915**

(43) Date of publication of application:
**28.07.82 Bulletin 82/30**

(84) Designated Contracting States:
**AT BE CH DE FR GB IT LI LU NL SE**

(71) Applicant: **INTER-SCIENCE RESEARCH AND DEVELOPMENT SERVICES (PROPRIETARY) LIMITED**
**729 Fourth Street Wynberg**
**Sandton Transvaal(ZA)**

(72) Inventor: **Greig, Gordon Elder**
**29 Leonora Road**
**Springs Transvaal(ZA)**

(74) Representative: **Bond, Bentley George et al, Haseltine Lake & Co. 28 Southampton Buildings Chancery Lane**
**London WC2A 1AT(GB)**

(54) **Planting and nurture of seeds.**

(57) Seeds 18 are secured adjacent the upper edge of a strip 10, 16 of a bio-degradable carrier element to the lower part of which is secured a quantity of a concentrated fertiliser 12. This strip is planted vertically in the soil, with the aid when necessary of pegs 22 to ensure verticality, and the soil is replaced to bury the seeds the required depth below the surface. The seeds are separated by a space from the fertiliser, and sound vertical root growth is promoted.

FIG_1

EP 0 056 687 A2

Croydon Printing Company Ltd

BACKGROUND OF THE INVENTION

This invention relates to the planting of seeds and to the nurture of the young plants after germination.

Many plants require considerable care in the planting of their seeds and the treatment of the young plant. In the planting process, care should generally be taken to space the seeds apart at suitable intervals in rows and to bury them to the correct depth, and to ensure that the rows are correctly spaced apart. In the case of some seeds such as maize it is also advisable to orient the seeds correctly and consistently.

In the post-germination care of the plants, it is often necessary or advisable to treat the plants or the surrounding ground with fertilisers and sometimes with herbicides, pesticides, fungicides or other chemicals. These steps must generally be taken at appropriate intervals as the plants grow, and are usually labour-intensive and expensive operations.

It has been proposed, for instance in French patent 1.294.190 (Deguen), to fix seeds at intervals by a substance such as glue to a carrier element which is buried in the ground, nutritive substances or insecticides being incorporated in the carrier. The carrier element may be a thread, or a ribbon or mesh, or the like.

Similarly, in French patent 1.083.479 (Losfeld) it has been proposed to mount seeds at intervals on a carrier element which may be a thread or a strip or ribbon of paper or the like. The seeds may be carried in pouches fixed to the carrier element, the pouches also carrying fertilisers and other chemicals; or the carrier strip may be impregnated with fertilisers and other chemicals.

The applicant has found that such proposals are impractical. If sufficient fertiliser is to be provided to feed the plant throughout its period of development to maturity, the fertiliser must necessarily then be concentrated, and a concentrated fertiliser, buried in the ground in contact with or in close proximity to a seed, tends in fact to inhibit or even prevent germination. The fertiliser attracts moisture and tends to generate a saline solution, which because of osmotic and other effects, prevents the normal moistening of the seed and the absorbtion by the seed of the water needed for healthy germination and early root growth. In some cases the seed may be "burned" or otherwise permanently damaged in this process.

In a controlled experiment conducted by the applicant, it was found that if maize seeds (which are generally hardy) were attached to a paper strip which bore a substantial quantity of a common inorganic fertiliser, and the strip was buried in seed boxes at the normal depth for planting maize seeds and in otherwise normal conditions, in mid-July in the Southern hemisphere, with daily watering, no germination took place for 36 days. After 50 days there had however been 80 percent germination, and thereafter the plants developed normally. Normally germination might have been expected within eight to ten days, at a rate considerably above 80%, even in the relatively cold weather prevailing. The explanation for this batch of seed is, the applicant has concluded that the high salinity in the vicinity of the seeds inhibited germination. A progressive decrease in salinity took place as a result of the daily watering, and when the salinity reached a suitably low level the seeds, which had remained viable throughout, underwent germination. By then, however, the nitrogenous fertiliser had to some extent been broken down and the nitrogen partly dissipated, so that fertiliser wastage occurred.

In another experiment involving radish seeds, the seeds were fixed to a paper carrier element which also bore a layer of conventional concentrated fertiliser. The carrier strip was buried in soil at the normal depth for radish seed and normal watering was applied. Germination was less than 5%. Radish has a low salt tolerance and the highly saline solution caused by watering of the fertiliser damaged most of the seeds. Similar results were also obtained with beans, lettuce and other vegetables which were known to be sensitive to so-called fertiliser burn.

This problem has to some extent been recognised in the prior art, and in British patent 605,799 (Anstey) the proposal has been made that a carrier element in the form of a strip of paper or other suitable material be provided with a series of pouches, each alternate pouch containing seeds and a non-burning fertiliser such as a hop manure, the intermediate pockets containing a concentrated fertiliser such as a potash (which tends to "burn" the seeds as mentioned above). The carrier strip was laid in a furrow and buried with soil.

Even this proposal has been found by the applicant to be unsatisfactory. When the strip of paper is laid in a furrow in the ground, the doses of concentrated fertiliser are located alongside the seeds, although being spaced away from them, and although germination occurs more or less normally, the root growth is distorted since the roots tend to grow laterally into contact with the areas where the concentrated fertiliser is located, rather than to grow generally vertically. This tends to stunt at least the early development of the plants and, if the seeds are planted near the surface of the soil, makes them highly vulnerable to dry conditions since the soil nearer the surface is always dryer than the underlying soil. With certain seeds, particularly of flowers and certain vegetables, which should be planted within a few millimetres of the surface, this method is entirely inapplicable.

On the other hand it is not possible or practical to provide a sufficient quantity of a non-burning fertiliser in the immediate vicinity of the seed to provide it with nutriment for its entire development after germination until maturity, since the non-burning fertilisers are not sufficiently strong.

## SUMMARY OF THE INVENTION

With this background, the applicant has set out to devise a method and means which will permit the easy and accurate placing of seeds in the soil, together with adequate quantities of concentrated fertiliser to nurture the young plant from germination to maturity, to ensure the optimum plant population for the area to be planted, and which will moreover be applicable both to seeds which must be planted near the surface and those which are planted at substantial depth.

According to the invention, a method of planting and nurturing seeds comprises the steps of securing the seeds at intervals to a carrier element in the form of a strip which also bears a quantity of a concentrated fertiliser and burying the carrier element in soil; characterised in that the seeds are located adjacent one edge of the strip and the fertiliser is located elsewhere, separated by a space from the seeds, and the strip is buried substantially vertically, with the seed-carrying edge uppermost.

In one convenient form the fertiliser is deposited continuously in the form of a slurry adjacent an edge of the strip, which is then dried. The seeds may be fixed adjacent the other edge, at a suitable distance (normally at least 10 mm) from the band of fertiliser. In another version the carrier element is a composite structure, being formed of a strip on which fertiliser has been continuously deposited over a major part if not the whole of its area, and a second strip, to which the seeds have been secured, is attached to the first strip, and in use forms the upper part of the composite structure.

When planting, it is important to maintain the strip at least substantially vertical. If a conventional furrow is provided pegs may be used to hold the otherwise unsupported strip vertical until the furrow has been back-filled. Alternatively, if the furrow is made with at least one vertical side, the strip may be placed in the furrow in contact with this vertical side and backfilling may then take place without pegging.

The invention also provides a structure comprising a carrier element in the form of a strip to which fertiliser is applied in concentrated form, with seeds secured at intervals along the strip, characterised in that the seeds are provided along and adjacent one edge of the strip and are separated by a space from the fertiliser.

The carrier is preferably a bio-degradable substance such as paper or cloth or the like. A suitable material in practice is a standard unbleached kraft bag-making paper.

It is also important to select a suitable adhesive to secure the seeds to the carrier element, if they are secured at all by adhesive. A hygroscopic or deliquescent adhesive should be avoided, since these substances tend to attract water away from the seeds and because of certain osmotic and other effects to cause retardation of the germination process. They are also relatively ineffective and if the ambient moisture content rises the seeds tend to fall off the carrier element. The adhesive should however be and remain water-miscible, and should be bio-degradable. Certain polyvinyl acetate adhesives have been found entirely suitable for this purpose, and also methyl cellulose and carboxy-methyl cellulose.

It is also normally necessary to secure the fertiliser to the carrier element by means of an adhesive. For this purpose urea formaldehyde compound is highly suitable. Since the inorganic concentrated fertilisers of the conventional kinds are slightly acid, this property is utilised with urea formaldehyde to achieve a degree of cross-linking, which assists in bonding the fertiliser to the carrier element. The cross-linking process can be enhanced by heating or the use of suitable catalysts.

Other adhesives may be used for securing the fertiliser to the carrier strip but those employing an organic solvent, such as nitrose cellulate, are generally too expensive to be commercially interesting. Insoluble adhesives such as the epoxies are impractical.

Urea formaldehyde, at least in unpolymerised form, is however not suitable for securing the seeds to the carrier strip since it tends to generate free formaldehyde, which retards or prevents germination.

The concentrated fertilisers may conveniently take the conventional granulated form. Examples are the commercially available 3:2:1 (30) and 2:3:2 (28) varieties. Special urea formaldehyde resins (mole ratio : 2 urea to 1 formaldehyde) are slow acting nitrogenous fertilisers not subject to leaching as are conventional nitrogenous fertilisers such as ammonium nitrate, ammonium sulphate and urea, and, in addition, because of their relative insolubility cannot cause "burning" of the plants. In the case of a crop such as maize up to 20 percent of the total nitrogen requirement can be provided by this means, and because of the slow release characteristic (release of nitrogen is effected by biological attack) further additions of nitrogenous fertilisers are made unnecessary for the entire growing period of the crop. Traditional nitrogenous fertilisers are adequate to provide sufficient nitrogen for immediate post-germination growth. Thus the use of slow acting nitrogenous fertilisers can show considerable savings in fertiliser, labour and agricultural machinery fuel costs.

It is also possible and in many cases desirable to incorporate an insecticide or other chemicals such as fungicides, fumigants, herbicides and the like in the carrier element. Such substances are usually dissolved in the adhesive used for securing the seeds or the fertiliser to the carrier element, or may be applied in a special zone by impregnation or similar processes. Systemic insecticides such as carbofuran are to be preferred.

BRIEF DESCRIPTION OF THE DRAWINGS

Figure 1 is a perspective view, partly broken away, of a first structure of the invention incorporating seeds and fertiliser;

Figure 2 is an end elevation view of the structure of Figure 1, shown separated in two parts during manufacture;

Figure 3 is a simplified elevation view of the planting of the strip of Figure 1 in a conventional furrow with the aid of pegs;

Figure 4 is an elevation view of an alternative peg for use in the process illustrated in Figure 3;

Figure 5 shows an elevation view of the planting of a structure of the invention in a furrow which has a vertical side;

Figure 6 is a perspective view of a second structure of the invention incorporating seeds and fertiliser;

Figure 7 is an end view of a modified form of the structure of Figure 6;

Figure 8 is a perspective view of another such structure; and

Figure 9 is a similar perspective view of a further such structure.

DESCRIPTION OF PREFERRED EMBODIMENTS

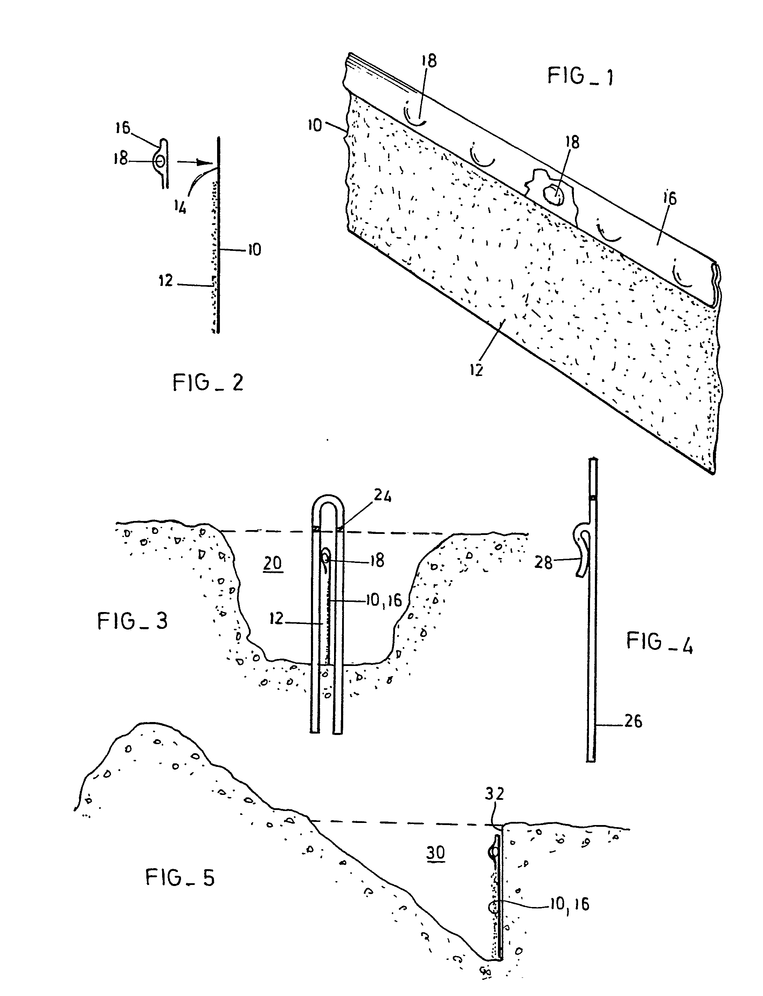

In Figures 1 to 3, a seed-bearing and fertiliser-bearing structure comprises a strip 10 of a bio-degradable carrier element, conveniently about 80 mm in height and formed in this case of unbleached kraft bag-making paper of a mass of 50 gm/sq.m. This material is strong and porous and highly bio-degradable. Other suitable materials for such a carrier element are newsprint, tissue paper and textiles formed from materials such as cotton, jute or hemp.

Secured to one side of the strip 10 is a layer 12 of granular fertiliser of a conventional concentrated type such as the 3:2:1 or 2:3:2 versions mentioned above. In practice it is preferred that in addition to the conventional concentrated fertilisers sufficient slow acting urea formaldehyde fertilisers are added to provide sufficient nitrogen to allow the plant to reach maturity without nitrogen starvation. The mixture of fertilisers (conventional and slow acting) may also be brought into the form of a slurry in a water miscible form. The slurry is then dried on the carrier element by passage through a drying oven or tunnel assuring good adhesion to the carrier.

The fertiliser 12 is applied in a wide band along the lower part of the strip 10. The upper edge 14 of the strip 10 is fertiliser-free, but in this zone a second strip 16 of the same paper is secured by an adhesive which may conveniently be of the polyvinyl acetate (water-miscible) type. The strip 16 is doubled over itself to form an elongate pocket in which are secured, at suitable intervals, a number of seeds 18. If they are large seeds such as maize they may be secured individually or (as is desirable for maize) in pairs, oriented for vertical planting of the strip 10,16.

If the seeds 18 are of a plant which requires a high degree of moisture to germinate or to develop in early plant growth, it is possible and desirable to include with the seeds in the folded strip 16 a suitable quantity of a material such as the powder sold commercially under the name Super Slurper (a trade mark), which gels with water and retains the water for a considerable time or by the admixture of an absorbent substance such as vermiculite which will retain the moisture conducive to good germination of seeds.. These materials would not normally be required for maize but are useful with certain other plants.

The composite strip 10,16 may be sold commercially in any convenient length for domestic or agricultural use. It is particularly useful in areas where unskilled or inexperienced farmers or gardeners will use it since it eliminates the problems of spacing and orientation of the seeds which they must otherwise resolve. The strip may also contain the correct fertiliser for the particular crop in the correct quantities to ensure an adequate harvest.

The composite strip 10,16 may also contain a quantity of an insecticide such as the systemic varieties mentioned earlier, preferably dissolved in the adhesive securing the strip 16 to the strip 10 so that it is present in the immediate vicinity of the seeds 18.

In use, the composite strip 10,16 is located vertically, with the seed-bearing edge uppermost, in a conventional furrow 20 in the ground. If this is necessary, pegs 22 of any suitable type are used to support the strip 10,16 before the furrow 20 is backfilled with soil. The peg 22 illustrated is of an inverted U-shape made of metal or plastics material. It may conveniently include a mark at the level 24, to show the depth to which it should be buried below the soil surface. After backfilling, the pegs 22 are removed from the soil and re-used.

Another form of peg useful to maintain the strip 10,16 vertical during planting in the soil is shown in Figure 4. In this case the peg 26 is of moulded plastics or bent wire construction and includes an integral resilient clip 28 for holding the strip 10,16 when the peg is inserted in the ground during planting.

In Figure 5 an alternative planting technique is illustrated in which a furrow 30 with one vertical wall or side 32 is provided and the strip 10,16 is placed in contact with the side 32 while backfilling occurs. This ensures that the strip 10,16 remains vertical at all times during and after planting.

It will be noted that the invention allows careful control of the depth to which the seeds 18 are planted below the surface of the soil, so that both shallow-planted and deep-planted seeds may be catered for by the invention.

For optimum results it has been found that the seeds should in virtually all cases be located some 10 mm or even more above the top of the band of fertiliser 12 on the strip 10. Water tends to drain almost entirely vertically downwards in soil and the consequence is that, after planting, a zone that is free of the saline fertiliser solution is maintained directly below the seeds. The young roots ramify downwards to reach the fertiliser, and this encourages and enhances good verticality in the root structure, so that the plants tend to be healthy and vigorous.

Even in the case of flowers and other seeds which are planted very near the soil surface, the invention is useful and practical since the carrier element, being laid vertically, does not interfere with the growth of the plant in the surface area, and drying at the surface likewise does not affect the release of the fertiliser in the lower and more moist soil. The invention is thus useful for most if not all seed crops.

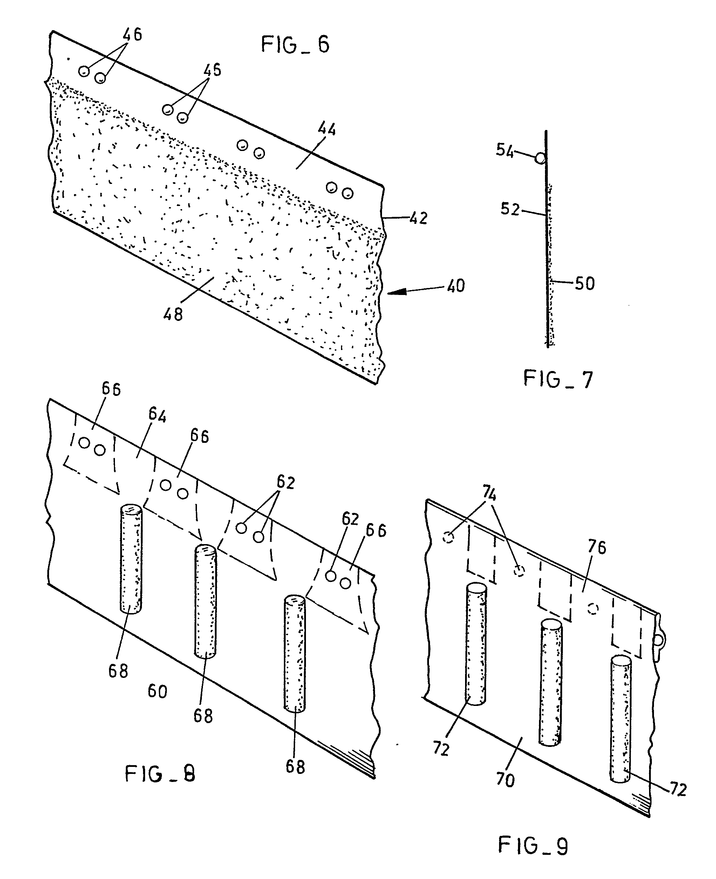

In Figures 6 and 7, a second seed- and fertiliser-bearing structure 40 is illustrated. In this case a single strip 42 of a carrier element such as bio-degradable paper has an upper edge 44 to which seeds 46 are attached by a suitable adhesive such as the water-miscible polyvinyl acetates mentioned above. The seeds are in this case exposed on the strip 40, and to this extent this structure is simpler and cheaper to manufacture than the strip 10,16 of the preceding figures. Again, the strip 40 may be of about 80 mm depth, with a space of at least 10 mm between the seeds 46 and the band of fertiliser 48, which extends to the lower edge of the strip.

Figure 7 shows a modified version of the strip of Figure 6. In this case the fertiliser 50 is secured to the opposite side of the strip 52 from that on which the seeds 54 are secured. Since the material of the strip 52 is however porous, the effect in practice of this construction is not materially different from that of Figure 6.

Figure 8 shows a version of the invention in which a strip 60 of a bio-degradable carrier element has secured to itself a series of seeds 62 in an upper edge zone 64 of the strip in which blocks of an insecticide 66 in granular form are provided (or an insecticide could be impregnated in the material of the strip 60 or dissolved in the adhesive securing the seeds 62 in place). The fertiliser is in this embodiment provided in the form of slugs or sticks formulated with the minimum surface area to ensure slow release, the slugs being secured in place by a suitable adhesive such as urea formaldehyde, and located on the same side of the strip 60 as the seeds 62.

Figure 9 shows an alternative version in which the strip 70 is provided on one side with slugs 72 of a formulated slow-release fertiliser, the other side of the strip being provided with seeds 74 in a zone along the upper edge of the strip and in which zone blocks of an insecticide or other chemical 76 are provided.

The strips of the invention bearing seeds and fertilisers and possibly other chemicals are conveniently provided in roll form or other compact form for transportation and merchandising, and may be of any convenient length. For the home gardener strips of some 2,5 m lengths are suitable.

In all cases it is desirable to ensure that the correct spacing of the seeds along the strip occurs in order to have the optimum plant population, assuring correct lateral spacing between furrows when the strips are buried in the soil.

The quantities of fertiliser and other chemicals to ensure proper growth of the plant from germination to maturity are well known for all plant varieties, and the invention caters adequately for the variations from one plant to another.

CLAIMS

1.    A method of planting and nurturing seeds comprising the steps of securing the seeds at intervals to a carrier element in the form of a strip which also bears a quantity of a concentrated fertiliser and burying the carrier element in soil; characterised in that the seeds are located adjacent one edge of the strip and the fertiliser is elsewhere, separated by a space from the seeds, and the strip is buried substantially vertically, with the seed-carrying edge uppermost.

2.    The method of claim 1, characterised by pegging the carrier element in a furrow in the soil to support it vertically, backfilling the furrow, and removing the pegs.

3.    The method of claim 1 or 2, characterised by supporting the carrier element against a substantially vertical wall of a furrow and backfilling the furrow with soil.

4.    The method of any of claims 1 to 3, characterised in that the fertiliser is in the form of a water miscible slurry applied to the carrier element and allowed to dry.

5.    A structure comprising a carrier element in the form of a strip which bears a quantity of fertiliser in concentrated form, with seeds secured at intervals along the strip, characterised in that the seeds are provided adjacent one edge of the strip and are separated by a space from the fertiliser.

6.    The structure of claim 5, characterised in that the seeds are secured to the carrier element by an adhesive that is bio-degradable and water-miscible but is not hygroscopic.

7.    The structure of claim 6, characterised in that the adhesive securing the seeds is a polyvinyl acetate.

8. The structure of any of claims 5 to 7, characterised in that the fertiliser is secured to the carrier element by an adhesive that is bio-degradable.

9. The structure of claim 8, characterised in that the adhesive securing the fertiliser is a urea formaldehyde compound.

10. The structure of any of claims 5 to 9, characterised in that sufficient fertiliser is provided to feed the plants from germination to maturity.

11. The structure of any of claims 5 to 10, characterised in that the space between the seeds and the fertiliser is at least 10 mm.

12. The structure of any of claims 5 to 11, characterised in that the carrier element is approximately 80 mm in depth.

FIG_1

FIG_2

FIG_3

FIG_4

FIG_5

0056687

FIG_6

FIG_7

FIG_8

FIG_9